# EUROPEAN PATENT SPECIFICATION

(11) **EP 1 217 820 B1**
(45) Date of publication and mention of the grant of the patent: **19.05.2004**
(21) Application number: 01420226.1
(22) Date of filing: 21.11.2001
(51) Int. Cl.: H04N 1/00

(54) **Remote processing and distribution of images in kiosks**
Fernverarbeitung und Bildverteilung in Kiosken
Télétraitement et distribution d'images en kiosques

(30) Priority: 19.12.2000 FR 0016541
(43) Date of publication of application: 26.06.2002
(73) Proprietor: EASTMAN KODAK COMPANY, Rochester, New York 14650 (US)
(72) Inventor: Furon, Olivier, c/o Kodak Industrie, 71102 Chalon sur Saone Cédex (FR); Vau, Jean-Marie, c/o Kodak Industrie, 71102 Chalon sur Saone Cédex (FR)
(74) Representative: Weber, Etienne Nicolas

(56) References cited:
- EP-A- 0 912 036
- US-A- 5 666 215
- US-A- 6 005 494
- PATENT ABSTRACTS OF JAPAN vol. 1999, no. 12, 29 October 1999 (1999-10-29) & JP 11 201769 A (MATSUSHITA ELECTRIC IND CO LTD), 30 July 1999 (1999-07-30)
- PATENT ABSTRACTS OF JAPAN vol. 1998, no. 12 31 October 1998 & JP 10 191 453 A (CASIO COMPUT CO LTD) 21 July 1998

## Description

### FIELD OF THE INVENTION

The present invention relates to the imaging domain field, and more particularly relates to the use of suitable telematic means that enable orders to be created for specific image-based work. The aim is to optimize the performance of this work in time, in order to be able to recover it at purpose-built distribution points or kiosks.

### BACKGROUND OF THE INVENTION

The new services expected by a telematics user must enable images to be received and sent. The services also must enable the processing of the images while easily and quickly obtaining or restoring these images on any type of media, especially in digital form or on a material media. Specific digital image-based work ordering and execution processes demonstrate this type of service. Based on a request coming from a user of this type of process, the ordering and execution of digital image-based work that a user wants to transform and reconstitute on a specific medium (paper, or other), and in a particular state (initial state of the image or processed image, i.e. transformed), must be able to operate in a friendly, interactive and fast way, while providing useful options for recovering the ordered work. In addition this must be from the various logistics circumstances and situations in which users are to be found, in particular when they move physically from one point to another. These new means as described above make up part of m-commerce (mobile commerce).

US 5,666,215 patent discloses a system and a method for remotely selecting photographic images. The method enables to select and to order photographic prints from a customer having a personal computer that is remote from a photofinisher. The method comprises essentially the steps of transmitting a display file from the photofinisher to the customer's remote location, selecting desired images for making photographic prints, and transmitting frame numbers associated with the selected images from the customer's location to the photofinisher.

### SUMMARY OF THE INVENTION

One of the objectives of the invention forms part of a specific application of the system. The invention permits a user to order specific image-based work from at least one basic digital image while traveling in a moving vehicle.

It is another objective of the invention to optimize the ordering process for image work in relation to the time spent between the order and the reconstitution of the work to the users, enabling them to order and then recover their work in concurrent time, while they are busy or performing another activity or task, independent of this image work order.

The process according to the invention permits the user of a transport vehicle equipped with a multimedia device that comprises an image display screen onboard the vehicle to issue an early photographic order. The process comprises the following steps:
- transferring at least one original digital image from a digital image database to the multimedia device;
- choosing at least one original digital image from the multimedia device;
- automatically accessing on the multimedia device, using a GPS link, the navigation parameters for the geographic location giving the vehicle's position;
- transmitting from the multimedia device to a processing center, the list of the vehicle's navigation parameters and the photographic order concerning the specific form of the work type to be executed from the at least one original digital image chosen, and if necessary the geographic position of the vehicle at the moment of transmitting the parameters to the processing center, the route planned by the user at the moment of transmitting the parameters to the processing center, the level of fuel remaining in the vehicle, and the average consumption recorded of the vehicle at the moment of transmitting the parameters to the processing center;
- automatically compiling all the vehicle navigation parameters and the photographic order transmitted, to deliver on the screen of the multimedia device, a list of fixed kiosks, compatible with the list of all the parameters transmitted to the processing center;
- choosing on the multimedia device, from the list of fixed kiosks delivered to the screen of the multimedia device, a preferred kiosk, for the delivery of the work performed; and
- automatically sending from the multimedia device, an order for the work to be executed in a specific form of the at least one original digital image chosen, to the preferred kiosk, as disclosed in JP 10 191 453, futher characterised in that the navigation parameters comprise, in addition to the geographic location of the transport vehicle and the road route planned by the user at the moment of transmitting the navigation parameters to the processing center, a level of fuel remaining in the vehicle and an average consumption recorded of the vehicle at the moment of transmitting the parameters to the processing center.

More particularly, the present invention relates to a method of sending a photographic order from a transport vehicle equipped with a multimedia device that comprises an image display screen. The method comprises the steps of transferring at least one original digital image from a digital image database to the multimedia device; choosing the at least one original digital image from the multimedia device; automatically accessing on the multimedia device navigation parameters reflective of a geographic location of the transport vehicle; transmitting from the multimedia device to a processing center, a list of the navigation parameters and the photographic order, with the photographic order including information on a specific form and type of work to be executed from the chosen at least one original digital image; automatically compiling the navigation parameters and the photographic order transmitted, to deliver on the screen of the multimedia device a list of fixed kiosks which are compatible with the list of the navigation parameters transmitted to the processing center; choosing on the multimedia device, from the list of fixed kiosks delivered to the screen of the multimedia device, a preferred kiosk; and automatically sending from the multimedia device to the preferred kiosk, a work order for the work to be executed in the specific form on the at least one chosen original digital image.

### BRIEF DESCRIPTION OF THE DRAWINGS

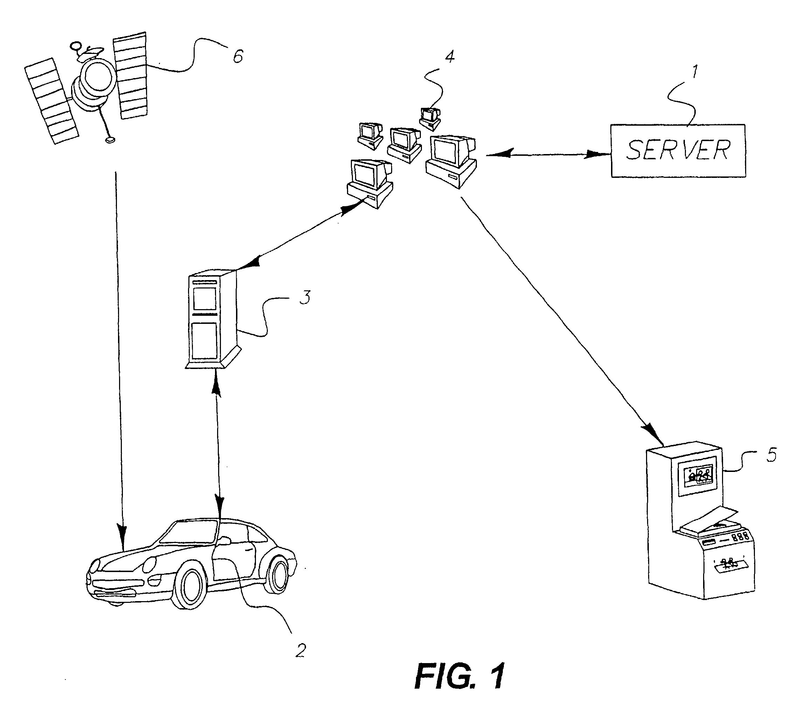

Other characteristics will appear on reading the following description, with reference to the drawing of Figure 1.

Figure 1 represents a block diagram of the process according to the invention.

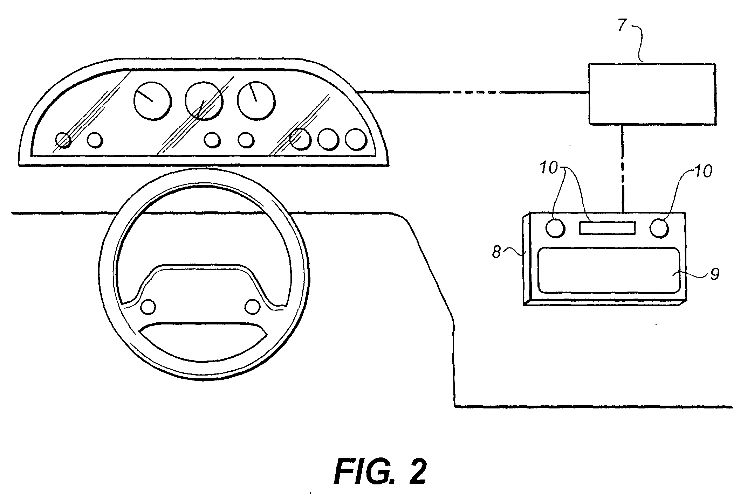

Figure 2 represents the multimedia console according to the invention inside a means of transport.

### DETAILED DESCRIPTION OF THE INVENTION

Among all the new applications that telematics can offer people having a means of transport equipped with an onboard multimedia device, the present invention is located in the imaging related services domain. The present invention relates to a process for delivering a service from a multimedia console 8 equipped with a screen 9. The multimedia console 8 is placed inside a means of transport 2. This can apply for instance to transport vehicles, such as cars, trucks, tourist buses, etc.

The user (vehicle driver or passenger) of such means used by the process of the invention can, from the vehicle, carry out digital image transactions, i.e. load, unload, view, and process the data of digital images using the console 8 equipped with a relatively good capacity display screen, e.g. 640 x 480 pixels. The vehicle 2 comprising the onboard console 8 is a kind of mobile photographic kiosk. It is one of the objectives of the invention to enable orders to be created for specific work related to these digital images that can be viewed on the screen 9 of the vehicle's 2 multimedia console 8, and can be the subject of orders for specific work based on the images. The vehicle user can then quickly recover, without loss of time (waiting) the ordered image work in another fixed photographic kiosk 5 located for instance approximately along a preferred route chosen by the user. One of the preferred embodiments of the invention is especially to enable users of vehicle equipped with the console 8, to optimize their timetable by recovering along the route they have planned to follow, their image work, for instance in a service station equipped with fixed kiosk 5, while profiting from a stop to refuel the vehicle at the same time. But the fixed kiosk 5 where the user recovers the image work can also for instance be located in a car parking lot, close to a restaurant, or cinema or any other preferred public passing place that comprises locations equipped with such kiosks.

The multimedia console 8 is equipped with connections and interfaces 10 for unloading or recovering digital image data in various ways. The user can for instance transfer photographs taken with a digital camera to the console 8 using an USB cable (Universal Serial Bus) or even a digital camera flash card, which when introduced into the console 8 enables the recovery on the console 8, of the digital data previously stored on the flash card. Also using a wireless link (e.g. Bluetooth) digital image data can be recovered from a portable terminal such as a cell phone, or image data from a PDA (Personal Digital Assistant) by using an infrared link. For wireless links a communication standard is used that enables the exchange of digital data, independently of the operating systems used, at fairly high rates, in the order of several megabits a second; which enables fast digital image transfer. The console 8 enables the viewing of one or more unloaded digital images and coming for instance from the previously mentioned external peripherals. The console 8, using power supplied by the vehicle battery 7, is equipped with an image processing program that enables in situ processing or transformations using the original image, as shown for instance by zooming in, rotation, etc. of the original image.

More directly, the user can recover or unload onto the console 8, for instance via a WAP link or an interface gateway 3, digital image data coming from an image database of the type of server 1. Reciprocally, it will be noted that the user can also load or transmit digital image data from the console 8 to the server 1.

The vehicle's onboard console 8 is essentially a GPS type (Global Positioning System) that is well known and used as a navigation system. The vehicle's coordinates or position are automatically obtained thanks to a transmitter-receiver system and a satellite link 6. In addition, this type of console 8a, linked to the vehicle's functional control module(s), is also used to access certain data such as: the vehicle's average fuel consumption in a given time (e.g. from the last starting up of the engine), and the amount of fuel remaining in the tank.

The process according to the invention lets the user, based on digital image data available on the console 8, to send a work order to be executed on the image database, to a processing center 4. This order is executed via a suitable wireless network, using known communications techniques, e.g. GSM type (Global System for Mobile), GPRS (General Packet Radio System), or UMTS (Universal Mobile Telecom System). The order can affect one or more digital images. The user can also simply consult from the console 8 digital images on a server 1, without transferring them to the console 8; when for instance the user does not want to perform any particular image processing. In this case, a particular embodiment of the invention enables the direct transfer of at least one chosen digital image, from the server 1 to the processing center 4, without transfer to the multimedia console 8. The digital image data is transferred, via the processing center 4, to the preferred kiosk 5 chosen by the user, at the time of automatically sending the work order.

The work executed from the original digital images includes reconstituting to users the image(s), in one or more copies, on a material or digital medium (e.g. cell phone) when they pass a fixed kiosk 5 located for instance on the road route they planned to take. The types of image media used for the reconstitution are for example paper (photographic paper), CD (Compact Disk), ceramic or plastic or equivalent (tableware: e.g. cups, plates), fabric or equivalent (e.g. T-shirt, Windbreaker®, caps). The process according to the invention is optimized, in that it takes into account, for the choice of reconstitution location (fixed kiosk 5), the parameters taken into account by the user just before issuing the order from the console 8; which is done while taking into account the availability of the ordered media in all the distribution locations. The main parameters taken into account and then compiled by the program do not directly affect the order, because they are essentially navigation parameters linked to the road network or to the vehicle; in particular: the geographic position of the vehicle at a given moment, the user's planned route, the level of fuel remaining in the vehicle, and the average consumption recorded of the vehicle. Of course, the user can choose to select or not one or more of these navigation parameters. Once the users have chosen all the parameters for the image work order and the navigation, they transmit it all, at a given moment, from the console 8a to the processing center 4. The process according to the invention enables the transmission some moments later, approximately between 15 seconds and one minute, on the console screen 9, a list of the fixed kiosks 5 compatible with the order and navigation parameters previously transmitted. At this moment or later, the user chooses or validates a preferred fixed kiosk 5. The process enables the automatic integration of this choice of preferred kiosk 5, via the processing center 4, to automatically pass the image(s) work order to the preferred kiosk 5, taking into account all the previously chosen parameters, in particular the type of medium and the number of ordered image samples.

If the user does not validate the order, just after the list of kiosks 5 is proposed, the processing center 4 takes into account and integrates periodically, for instance every minute, the new changing or varying values of the navigation parameters. This is done so long as the user has not chosen or validated a preferred kiosk 5. In other words, the update of the list of proposed fixed kiosks 5 is done in real time (automatically in time), by integrating the change of the navigation parameters, between the moment when they were initialized by the user and the moment when the user validates the work order.

A preferred embodiment of the invention concerns the user of a car. This embodiment illustrates the previously mentioned compatibility between the list of navigation and order parameters, and the proposed list of fixed kiosks 5. Apart from the order parameters (type of medium and number of samples per image), the console or multimedia device 8 usually transmits the following navigational parameters to the processing center 4: the vehicle's geographic position, planned road route, average consumption recorded and fuel remaining in the vehicle. The information reconstituted by the processing center 4 on the console screen 9 preferably proposes the list of fixed kiosks 5 placed in a service station located on the planned route. Users can thus choose a preferred fixed kiosk 5, permitting them, given the compilation of all the photographic order and navigation parameters taken into account by the processing center 4, to recover the work in a reasonable time while refueling the vehicle; all in the service station including the previously chosen preferred kiosk 5. In this way one of the major advantages of the invention can be seen concerning the optimization of the service supplied to the user in terms of this work on a digital image database: profiting from vehicle refueling while following the route, and recovering the image work ordered just beforehand without waiting.

A preferred embodiment of the process according to the invention enables the user to be automatically invoiced for the image work carried out, which is done from the processing center 4. The advantage of this automatic operation is that the user does not have to worry concretely about the payment when recovering the work. In this embodiment, the user has an electronic account number on the Internet and is linked to a particular service, by having for instance subscribed to this service. The user's account is thus debited automatically in real time or periodically, for instance monthly, according to the work done.

Another particular advantageous embodiment of the process according to the invention includes integrating a voice recognition system to the multimedia device or console 8 onboard the vehicle. This system lets the user be alerted orally by the console 8, via the processing center 4, as soon as the image work is executed in the preferred kiosk 5.

## Claims

1. A method of sending a photographic order from a transport vehicle (2) equipped with a multimedia device (8) that comprises an image display screen (9), the method comprising the steps of :
transferring at least one original digital image from a digital image database (1) to the multimedia device (8);
choosing the at least one original digital image from the multimedia device;
automatically accessing on the multimedia device (8) navigation parameters reflective of a geographic location of the transport vehicle (2);
transmitting from the multimedia device (8) to a processing center (4), a list of the navigation parameters about the geographic location of the transport vehicle (2), the road route planned by the user at the moment of transmitting the navigation parameters to the processing center (4), and transmitting from the multimedia device (8) to the processing center (4) the photographic order, the photographic order including information on a specific form of the work type to be executed from the chosen at least one original digital image;
automatically compiling the navigation parameters and the photographic order transmitted, to deliver on the screen (9) of the multimedia device (8) a list of fixed kiosks (5), compatible with the list of the navigation parameters transmitted to the processing center (4); choosing on the multimedia device (8), from the list of fixed kiosks delivered to the screen of the multimedia device, a preferred kiosk; and
automatically sending from the multimedia device to the preferred kiosk, a work order for the work to be executed in the specific form of the at least one chosen original digital image;
**characterised in that** the navigation parameters comprise, in addition to the geographic location of the transport vehicle (2) and the road route planned by the user at the moment of transmitting the navigation parameters to the processing center (4), a level of fuel remaining in the vehicle (2) and an average consumption recorded of the vehicle (2) at the moment of transmitting the parameters to the processing center.

2. The method according to Claim 1, wherein, after the step of sending the photographic order to be executed to the processing center (4), an invoicing is done automatically from the processing center, by debiting an electronic account of a user.

3. The method according to Claim 1, wherein a system of voice recognition integral with the multimedia device orally alerts a user as soon as the work to be executed is available in the preferred kiosk.

4. The method according to Claim 1, wherein the chosen at least one original digital image is transferred from an image capture device to the vehicle's multimedia device.

5. The method according to Claim 4, wherein the image capture device is a digital camera.

6. The method according to Claim 4, wherein the image capture device is a portable terminal.

7. The method according to Claim 1, wherein the at least one chosen original image is transferred from an image server (1) to the vehicle's multimedia device (8).

8. The method according to Claim 1, wherein the original digital image from a digital image database is simply consulted on the multimedia device without transferring the said image to the said multimedia device.

9. The method according to Claim 8, wherein digital data, for the at least one original digital image chosen and used as a basis for the work to be executed is transferred directly from the server (1) to the processing center (4).

10. The method according to Claim 1, wherein the work order for the at least one chosen original digital image is reconstituted at the preferred kiosk in a visual form affixed to a material medium.

11. The method according to Claim 10, wherein the work order for the at least one chosen original digital image is reconstituted at the preferred kiosk in the form of a photographic paper medium.

12. The method according to Claim 10, wherein the work order for the at least one chosen original digital image is reconstituted at the preferred kiosk in the form of a compact disk.

13. The method according to Claim 10, wherein the work order for the at least one chosen original digital image is reconstituted at the preferred kiosk on a portable terminal equipped with a display screen.

14. The method according to Claim 1, wherein the preferred kiosk is placed in a service station.

## Patentansprüche

1. Verfahren zum Versenden eines fotografischen Auftrags aus einem Transportfahrzeug (2), das mit einer Multimedia-Einrichtung (8) ausgerüstet ist, die einen Bildschirm (9) aufweist, wobei das Verfahren folgende Schritte umfasst:
- Übertragen von mindestens einem digitalen Originalbild von einer Digitalbild-Datenbank (1) zur Muttimedia-Einrichtung (8);
- Auswählen des mindestens einen digitalen Originalbildes von der Multimedia-Einrichtung;
- automatisches Zugreifen auf Navigationsparameter in der Multimedia-Einrichtung (8), welche einen geografischen Standort des Transportfahrzeugs (2) wiedergeben;
- Übermitteln von der Multimedia-Einrichtung (8) zu einem Vexarbeitungszentrum (4) einer Liste der Navigationsparameter über den geografischen Standort des Transportfahrzeugs (2), der vom Benutzer zum Zeitpunkt der Übermittlung der Navigationsparameter zum Verarbeitungszentrum (4) geplanten Straßenroute, und Übermitteln von der Multimedia-Einrichtung (8) zum Verarbeitungszentrum (4) des fotografischen Auftrags, der Informationen über eine spezielle Art der durchzuführenden Arbeit bezüglich des ausgewählten mindestens einen digitalen Originalbildes enthält;
- automatisches Zusammenstellen der übermittelten Navigationsparameter und des fotografischen Auftrags, um auf dem Bildschirm (9) der Multimedia-Einrichtung (8) eine Liste von festgelegten Kiosken (5), die mit der Liste der dem Verarbeitungszentrum (4) übermittelten Navigationsparameter kompatibel ist, anzuzeigen;
- auf der Multimedia Einrichtung (8) Auswählen eines bevorzugten Kiosks aus der auf dem Bildschirm der Multimedia-Einrichtung angezeigten Liste festgelegter Kioske; und
- automatisches Versenden von der Muhimedia-Einrichtung zum bevorzugten Kiosk eines Arbeitsauftrags für die in der speziellen Art durchzuführende Arbeit des mindestens einen ausgewählten digitalen Originalbildes;
**dadurch gekennzeichnet, dass** die Navigationsparameter außer dem geografischen Standort des Transportfahrzeugs (2) und der vom Benutzer zum Zeitpunkt der Übermittlung der Navigationsparameter zum Verarbeitungszentrum (4) geplanten Straßenroute auch Information über die verbleibende Kraftstoffmenge im Fahrzeug (2) und den zum Zeitpunkt der Übermittlung der Parameter zum Verarbeitungszentrum vom Fahrzeug (2) aufgezeichneten, durchschnittlichen Kraftstoffverbrauch enthalten.

2. Verfahren nach Anspruch 1, **dadurch gekennzeichnet, dass** nach dem Schritt zum Versenden des durchzuführenden, fotografischen Auftrags zum Verarbeitungszentrum (4), dieses automatisch fakturiert und ein elektronisches Konto des Benutzers belastet.

3. Verfahren nach Anspruch 1, **dadurch gekennzeichnet, dass** ein in der Multimedia-Einrichtung integriertes Spracherkennungssystem den Benutzer mündlich benachrichtigt, sobald die durchzuführende Arbeit im bevorzugten Kiosk zur Verfügung steht.

4. Verfahren nach Anspruch 1, **dadurch gekennzeichnet, dass** das mindestens eine, ausgewählte, digitale Originalbild von einer Bilderfassungseinrichtung zur Multimedia-Einrichtung des Fahrzeugs übermittelt wird.

5. Verfahren nach Anspruch 4, **dadurch gekennzeichnet, dass** die Bilderfassungseinrichtung eine Digitalkamera ist.

6. Vorrichtung nach Anspruch 4, **dadurch gekennzeichnet, dass** die Bilderfassungseinrichtung ein tragbarer Terminal ist.

7. Vorrichtung nach Anspruch 1, **dadurch gekennzeichnet, dass** das mindestens eine ausgewählte Originalbild von einem Bildserver (1) zur Multimedia-Einrichtung (8) des Fahrzeugs übermittelt wird.

8. Verfahren nach Anspruch 1, **dadurch gekennzeichnet, dass** das digitale Originalbild von einer Digitalbild-Datenbank einfach über die Multimedia-Einrichtung konsultiert wird, ohne das Bild zur Multimedia-Einrichtung zu übermitteln.

9. Verfahren nach Anspruch 8, **dadurch gekennzeichnet, dass** Digitaldaten für das mindestens eine ausgewählte, digitale Originalbild, welches als Grundlage für die durchzuführende Arbeit benutzt wird, direkt vom Server (1) zum Verarbeitungszentrum (4) übermittelt werden.

10. Verfahren nach Anspruch 1, **dadurch gekennzeichnet, dass** der Arbeitsauftrag für das mindestens eine ausgewählte, digitale Originalbild beim bevorzugten Kiosk in visueller Form, angeheftet an ein körperliches Medium, wiederhergestellt wird.

11. Verfahren nach Anspruch 10, **dadurch gekennzeichnet, dass** der Arbeitsauftrag für das mindestens eine ausgewählte, digitale Originalbild beim bevorzugten Kiosk in Form eines fotografischen Papiermediums wiederhergestellt wird.

12. Verfahren nach Anspruch 10, **dadurch gekennzeichnet, dass** der Arbeitsauftrag für das mindestens eine ausgewählte, digitale Originalbild beim bevorzugten Kiosk in Form einer CD wiederhergestellt wird.

13. Verfahren nach Anspruch 10, **dadurch gekennzeichnet, dass** der Arbeitsauftrag für das mindestens eine ausgewählte, digitale Originalbild beim bevorzugten Kiosk auf einem mit einem Bildschirm ausgerüsteten, tragbaren Terminal wiederhergestellt wird.

14. Verfahren nach Anspruch 1, **dadurch gekennzeichnet, dass** sich der bevorzugte Kiosk in einer Tankstelle befindet.

## Revendications

1. Procédé permettant à l'utilisateur d'un véhicule de transport (2) muni d'un dispositif multimédia (8) comprenant un écran d'affichage d'image (9) de passer une commande photographique, ledit procédé comprenant les étapes suivantes :
- transférer au moins une image numérique originale d'une base de données (1) d'images numériques vers le dispositif multimédia (8);
- choisir au moins une image numérique originale à partir du dispositif multimédia ;
- accéder automatiquement sur le dispositif multimédia (8) aux paramètres de navigation du véhicule reflétant la localisation géographique du véhicule de transport (2) ;
- transmettre du dispositif multimédia (8) au centre de traitement (4), la liste des paramètres de navigation relatifs à la localisation géographique du véhicule de transport (2), le plan de route prévu par l'utilisateur au moment de la transmission des paramètres de navigation au centre de traitement (4) et transmettre du dispositif multimédia (8) au centre de traitement (4), la commande photographique contenant les informations relatives à la forme spécifique du type de travaux à exécuter à partir d'au moins l'image numérique originale choisie ;
- compiler automatiquement l'ensemble des paramètres de navigation et de la commande photographique transmis, pour délivrer sur l'écran (9) du dispositif multimédia (8) une liste de kiosques fixes (5), compatibles avec la liste des paramètres de navigation transmis au centre de traitement (4);
- choisir depuis le dispositif multimédia (8), dans la liste des kiosques fixes apparaissant sur l'écran du dispositif multimédia, un kiosque préféré, et
- envoyer automatiquement depuis le dispositif multimédia vers le kiosque préféré, un ordre de commande des travaux à exécuter sous une forme spécifique d'au moins l'image numérique originale choisie,
ledit procédé étant **caractérisé en ce que** les paramètres de navigation comprennent, outre la localisation géographique du véhicule de transport (2) et le plan de route prévu par l'utilisateur au moment de la transmission des paramètres de navigation au centre de traitement (4), le niveau de carburant restant dans le véhicule (2) et la consommation moyenne enregistrée du véhicule (2) au moment de la transmission des paramètres au centre de traitement.

2. Procédé selon la revendication 1, dans lequel, après envoi de l'ordre de commande des travaux à exécuter au centre de traitement (4), la facturation est établie automatiquement à partir du centre de traitement, en débitant le compte électronique de l'utilisateur.

3. Procédé selon la revendication 1, dans lequel un système de reconnaissance vocale intégré au dispositif multimédia avertit oralement l'utilisateur dès que les travaux à exécuter sont disponibles dans le kiosque préféré.

4. Procédé selon la revendication 1, dans lequel au moins l'image numérique originale choisie est transférée d'un dispositif de capture d'images vers le dispositif multimédia du véhicule.

5. Procédé selon la revendication 4, dans lequel le dispositif de capture d'images est un appareil photographique numérique.

6. Procédé selon la revendication 4, dans lequel le dispositif de capture d'images est un terminal portable.

7. Procédé selon la revendication 1, dans lequel au moins l'image originale choisie est transférée d'un serveur d'images (1) vers le dispositif multimédia (8) du véhicule.

8. Procédé selon la revendication 1, dans lequel on consulte simplement sur le dispositif multimédia l'image numérique originale d'une basé de données d'images numériques, sans transférer ladite image vers le dispositif multimédia.

9. Procédé selon la revendication 8, dans lequel on transfère directement les données numériques concernant au moins l'image numérique originale choisie servant de base aux travaux à exécuter, du serveur (1) vers le centre de traitement (4).

10. Procédé selon la revendication 1, dans lequel les travaux commandés d'au moins l'image numérique originale choisie sont restitués au kiosque préféré sous une forme visuelle apposée sur un support matériel.

11. Procédé selon la revendication 10, dans lequel les travaux commandés d'au moins l'image numérique originale choisie sont restitués au kiosque préféré sous la forme d'un support papier photographique.

12. Procédé selon la revendication 10, dans lequel les travaux commandés d'au moins l'image numérique originale choisie sont restitués au kiosque préféré sous la forme d'un disque compact.

13. Procédé selon la revendication 10, dans lequel les travaux commandés d'au moins l'image numérique originale choisie sont restitués au kiosque préféré sur un terminal portable muni d'un écran d'affichage.

14. Procédé selon la revendication 1, dans lequel le kiosque préféré est situé dans une station service.
